# EUROPÄISCHE PATENTSCHRIFT

(11) **EP 2 046 855 B1**
(45) Veröffentlichungstag und Bekanntmachung des Hinweises auf die Patenterteilung: **19.10.2011**
(21) Anmeldenummer: 07765654.4
(22) Anmeldetag: 27.06.2007
(51) Int. Cl.: C08G 18/48, C08G 18/75, C09J 175/08

(54) **HAFTKLEBSTOFFE AUS EINEM HARZMODIFIZIERTEN POLYURETHAN**
PRESSURE-SENSITIVE ADHESIVE FROM A RESIN-MODIFIED POLYURETHANE
MASSE AUTO-ADHÉSIVE CONSTITUÉE D'UN POLYURÉTHANE MODIFIÉ PAR UNE RÉSINE

(30) Priorität: 19.07.2006 DE 102006033796
(43) Veröffentlichungstag der Anmeldung: 15.04.2009
(73) Patentinhaber: TESA SE, 20253 Hamburg (DE)
(72) Erfinder: SCHÜMANN, Uwe, 25421 Pinneberg (DE); WEILAND, Kirstin, 21035 Hamburg (DE); ZU PUTLITZ, Bodo, 22763 Hamburg (DE)
(86) Internationale Anmeldenummer: PCT/EP2007/056398
(87) Internationale Veröffentlichungsnummer: WO 2008/009542

(56) Entgegenhaltungen:
- EP-A2- 1 469 024
- WO-A-02/12365
- WO-A-97/25360
- DE-A1- 19 840 786
- US-A- 6 133 398

## Beschreibung

Die Erfindung betrifft Haftklebstoffe auf Basis einer Mischung aus einem chemisch vernetzten Polyurethan und mindestens einem Kohlenwasserstoffharz, mit denen in einer bevorzugten Ausführungsform Papier, Pappe oder andere leichte bis mittelschwere Gegenstände des täglichen Gebrauchs sicher auf sich selbst oder andere Untergründe geklebt und rückstandsfrei wieder abgelöst werden können, weitestgehend ohne das Papier, die Pappe, die Gegenstände oder die Untergründe beim Ablösen zu schädigen oder fettig aussehende Flecken zu hinterlassen, welcher insbesondere transparent, lichtstabil, mehrfach verwendbar und abwaschbar ist. Die Erfindung betrifft außerdem Haftklebstoffe auf Basis einer Mischung aus einem chemisch vernetzten Polyurethan und mindestens einem Kohlenwasserstoffharz, mit denen in einer weiteren bevorzugten Ausführungsform leichte bis mittelschwere Gegenstände auch unter hohen Scherbelastungen dauerhaft auf sich selbst oder andere Untergründe geklebt werden können, ein Reaktivbeschichtungsverfahren zu deren lösemittel- und wasserfreier kontinuierlicher Herstellung sowie die Verwendung der Haftklebstoffe zur Herstellung von selbstklebenden Artikeln, wie zum Beispiel Klebebändern, Klebfilmen, Klebstreifen, Klebfolien oder Klebepads.

Haftklebrige beziehungsweise eigenklebrige Eigenschaften sind für Polyurethane nicht typisch. Obwohl Polyurethane in der Rangliste der Kunststoffe hinsichtlich der produzierten Mengen auf Platz fünf stehen, spielen Haftklebstoffe aus diesem Material wirtschaftlich nur eine sehr untergeordnete Rolle.

Dennoch sind Haftklebstoffe aus Polyurethan seit langem bekannt und werden in vielfältiger Weise beschrieben. Es ist ebenfalls seit langem bekannt, dass der Effekt der Haftklebrigkeit durch den Zusatz von Klebrigmacher-Harzen und/oder Weichmachern zum Polyurethan-Grundpolymer erzielt werden kann.

Diese Methode wird zum Beispiel in US 3,437,622 A (Dahl et al., Continental Tapes), US 3,718,712 A (Tushaus et al., 3M), US 4,087,392 A (Hartmann et al., BASF), DE 19 04 102 A (Hagenweiler, BASF) und JP 2000 256 639 (Toyo) beschrieben.

Die derart bislang beschriebenen Haftklebstoffe haben den Nachteil, auf den meisten Haftgründen, insbesondere auf Papier oder Pappe, bei längerer Verklebungsdauer einerseits stark aufzuziehen und somit nicht ohne Schädigung wiederablösbar zu sein, andererseits schon bei geringen Scherbelastungen nachzugeben, so dass es schnell zu einem kohäsiven Versagen der Verklebung kommt.
Unter dem Begriff "Aufziehen" versteht dabei der Fachmann die Erhöhung der adhäsiven Verklebungsfestigkeit bei Lagerung des Klebverbundes.
Weiterhin kann das Klebrigmacherharz in den Haftgrund migrieren und dort fettig aussehende Flecken hinterlassen. Außerdem sind die bislang beschriebenen harzhaltigen Haftklebstoffe auf Basis von Polyurethan nicht transparent.

Das sehr störende Phänomen, dass nach dem Wiederablösen des Haftklebstoffs von Papier, Pappe, Tapete oder ähnlichen Materialien "Fettflecken" zurückbleiben, ist vor allem auch bei denjenigen polyurethanbasierten Haftklebstoffen zu beobachten, bei denen die Haftklebrigkeit durch eine Untervernetzung, also einen Unterschuss an Isocyanatgruppen gegenüber den mit den Isocyanatgruppen reagierenden Gruppen wie zum Beispiel Hydroxyl- oder Aminogruppen erzielt wird.
Nach dem Prinzip der Untervernetzung konzipierte Haftklebstoffe sind zum Beispiel in US 5,157,101 A (Orr, Norwood), DE 24 35 218 A (Adsley et al., Adhesive Tapes), JP 59 227 922 A1 (Sanyo), US 3,930,102 A (Szonn et al., Beiersdorf), US 5,714,543 A (Kydonieus et al., Bristol Myers Squibb), EP 0 597 636 A1 (Kydonieus et al., Squibb) und US 5,591,820 A (Kydonieus et al., Squibb) beschrieben.

In eine sehr ähnliche Kategorie mit analogen Schwächen fallen Polyurethan-Haftklebstoffe, die Monoole enthalten. Derartige Polyurethane sind ebenfalls untervernetzt und enthalten somit höhere Anteile an migrierfähigen Polyurethan-Einheiten mit geringem Molekulargewicht.
Polyurethan-Haftklebstoffe auf dieser Basis sind zum Beispiel aus EP 0 882 749 A1 (Ikeda et al., Nitto), US 5,227,409 A (Mobley et al., Dow) und US 5,102,714 A (Mobley et al., Dow) bekannt.

In einem weiteren Typus von Haftklebstoffen aus Polyurethan werden Hydroxylgruppen tragende doppelbindungshaltige Polyolkomponenten eingesetzt. Polyurethan-Haftklebstoffe auf dieser Basis sind zum Beispiel in JP 02 003 476 A1 (Tsubota et al., Shinko), WO 98/30648 A1 (Gerard et al., Shell), JP 59 230 076 A1 (Sekisui), JP 2001 146 577 A1 (Toyo), US 3,879,248 A (Kest), US 3,743,616 A (Kest), US 3,743,617 A (Kest), US 5,486,570 A (St. Clair, Shell) und US 3,515,773 A (Dahl et al., Continental Tapes) aufgeführt. Nachteilig ist die oxidative Empfindlichkeit dieser Haftklebstoffe, hervorgerufen durch die Doppelbindungen in der Polymerhauptkette. Dies führt nach einiger Zeit zu einer Verlackung oder zu einem Abstumpfen der haftklebrigen Oberfläche. Weiterhin enthalten die meisten Haftklebstoffe dieses Typus noch zusätzlich Harze, was die bereits weiter oben beschriebenen Nachteile zur Folge hat.

Ein spezieller Kohlenstoff-Kohlenstoff-Doppelbindungen enthaltender Polyurethan-Haftklebstoff, basierend auf dem Naturprodukt Rizinusöl, wird in US 3,246,049 A (Webber, Norton) beschrieben. Auch hier ist als Schwäche die oxidative Empfindlichkeit anzusehen.

In EP 0 979 835 A (Questel et al., Elf Atochem) werden Hydroxyl-terminierte Polyalkylene als Polyol-Komponente vorgeschlagen, womit das Problem der oxidativen Empfindlichkeit gelöst wäre. Die Zusammensetzungen sind allerdings feuchtigkeitshärtend, erreichen somit eine hohe kohäsive Endfestigkeit und sind nicht mehrfach verwendbar, so dass sie für reversible Papierverklebungen ungeeignet sind. Zudem enthalten sie Klebrigmacherharze und Weichmacher, deren Nachteile bereits weiter oben beschrieben wurden.

Feuchtigkeitshärtende Polyurethan-Haftklebstoffe werden außerdem zum Beispiel auch noch in US 4,661,542 A (USM), JP 63 189 486 A1 (Sanyo) und EP 0 196 749 A1 (von Voithenberg et al., Emhart) beschrieben.

Ein Polyurethan-Haftklebstoff auf Basis von hydrierten Polybutadienen wird in JP 01 156 386 A1 (Uehara et al., Hitachi) beschrieben. Nachteilig ist hier die Notwendigkeit einer Elektronenstrahlvernetzung, die einen erheblichen technischen Aufwand bedeutet.

Ein Polyurethan-Haftklebstoff, der ebenfalls durch Elektronenstrahlen gehärtet werden muss, ist aus JP 63 260 977 A1 (Uehara et al., Hitachi) bekannt. Dort werden Polyether als Polyol-Komponente eingesetzt.

In einigen Schriften werden Polyurethan enthaltende Blends oder Polyurethan-Copolymerisate mit haftklebrigen Eigenschaften beschrieben. Beispiele sind US 5,910,536 A (Kydonieus et al., Bristol Myers Squibb), US 5,714,543 A (Shah et al., Bristol Myers Squibb) und US 4,626,475 A (Barnett et al., Ashland Oil). Diese Haftklebstoffe zeichnen sich in der Regel durch einen erhöhten Tack aus und sind daher von Papier und anderen empfindlichen Substraten nur schwer ohne Schädigung zu entfernen.

Polyurethan-Haftklebstoffe mit speziellen Zusatzeigenschaften wie zum Beispiel Flammfestigkeit oder elektrische Leitfähigkeit werden beispielsweise in EP 1 108 768 A1 (Wong, Tyco) oder US 4,855,077 A (Hata et al., Takiron) beschrieben.

Geschäumte Polyurethane mit haftklebrigen Eigenschaften sind ebenfalls bekannt. Beispielhaft sei die DE 24 35 217 A (Adsley et al., Adhesive Tapes) genannt sowie die Beschreibungen hydrophiler Schäume in DE 42 33 289 A (Kenndoff et al., Beiersdorf) und WO 94/07935 A (Kenndoff et al., Beiersdorf).
Grundsätzlich haben geschäumte Polyurethane durch die Vergrößerung der Oberfläche den Nachteil einer erhöhten oxidativen Empfindlichkeit sowie einer erhöhten Lichtempfindlichkeit. In der Praxis hat sich gezeigt, dass sie auf Papier und Pappe bei längerer Verklebungsdauer stark aufziehen und entweder nur unter Schädigung des Papiers oder der Pappe abziehbar sind oder aber, insbesondere im Falle der durch Superabsorber-Zusätze hydrophil eingestellten Schäume, mit dem Papier oder der Pappe in einer Weise in Wechselwirkung treten, dass es zur Fleckenbildung kommt.

Polyurethane mit haftklebrigen Eigenschaften können, wie in JP 2000 073 040 A1 (Toyo) und JP 2000 256 638 A1 (Toyo) aufgezeigt wird, auch durch Verwendung von sowohl Polyethern als auch Polyestern sowie zweier unterschiedlicher Katalysatoren innerhalb einer Polyolkomponenten-Rezeptur erhalten werden. Nachteilig daran ist vor allem die durch die Rezepturen bedingte Erhöhung an Komplexität in der Herstellung.

In JP 2000 328 034 A1 (Toyo), US 3,761,307 A (Dahl) und US 3,925,283 A (Dahl, Continental Tapes) werden haftklebrige Polyurethan/-harnstoffe beschrieben, die durch Einbau zusätzlicher aminischer Kettenverlängerer beziehungsweise Vernetzer in das Polymer erhalten werden. Als nachteilig werden die Komplexität in der Herstellung empfunden sowie das zu vermutende zu starke Aufziehverhalten auf Papier.

In DE 21 39 640 A (Dollhausen et al., Bayer) wird ein Haftklebstoff auf Basis eines aromatischen Diisocyanatourethans beschrieben. Nachteilig ist vor allem die für aromatische Polyurethane typische Vergilbungsneigung.

Zur Erzielung haftklebriger Eigenschaften werden in DE 100 30 908 A1 (Bolte et al., Henkel) und in EP 0 081 103 A1 (Miyake et al., Takeda) die Verwendung zweier unterschiedlicher Isocyanate innerhalb einer Polyurethan-Zusammensetzung vorgeschlagen. Auch in diesen Fällen wird die Komplexität in der Herstellung als nachteilig empfunden.

In WO 97/22642 A1 (Chang et al., Bristol Myers Squibb) wird vorgeschlagen, zur Herstellung eines Haftklebstoffs ein NCO-terminiertes Prepolymer und eine Polyhydroxyverbindung so lange bei einer bestimmten Temperatur zusammen zu erhitzen, bis ein Gelanteil von 30 bis 40 % erhalten wird. Nachteilig an dieser Methode ist die Durchfettungsneigung bei Verwendung des Haftklebstoffs zum Verkleben von Papier, die sich aus dem relativ niedrigen Gelgehalt ergibt.

Aus US 3,796,678 A (Bartizal, 3M) ist ein Polyurethan-Haftklebstoff auf Basis verkappter Isocyanat-Prepolymere bekannt, der in der Herstellung auf Wasser oder organische Lösemittel angewiesen ist. Als nachteilig werden die komplexe Art der Herstellung angesehen sowie die Notwendigkeit, Wasser oder Lösemittel einsetzen zu müssen.

Ein Polyurethan-Latex-Haftklebstoff wird in WO 98/31760 A1 (Schrock et al., Dow Chemical) beschrieben. Nachteilig ist die Notwendigkeit einer Trocknung, wodurch es entweder unmöglich oder zumindest sehr zeitaufwändig ist, blasenfreie Haftklebstofffilme größerer Dicke zu erzielen.

In einigen Schriften wird ein Polyurethan-Haftklebstoff über die Vernetzungsdichte definiert. In GB 1,113,925 A (Weller) und GB 1,216,672 A (Grindley) werden Kettenlängen zwischen den Vernetzungspunkten von 130 bis 285 Kettenatomen beziehungsweise mehr als 285 Kettenatomen vorgeschlagen. In der Praxis hat sich gezeigt, dass eine Steuerung der Haftklebeeigenschaften über das Kriterium Kettenlänge allein nicht möglich ist. Eine zu geringe Vernetzungsdichte hat das bekannte Durchfettungsproblem bei Papierverklebungen zur Folge, eine zu hohe Vernetzungsdichte führt zu Haftklebstoffen mit unzureichender Eigenklebrigkeit.

In EP 1 088 871 A1 (Heguri et al., Sekisui) wird für das verwendete Polyisocyanat eine bestimmte Distanz zwischen den Isocyanatgruppen beziehungsweise ein bestimmter Vernetzungsgrad vorgeschrieben. Das Molekulargewicht zwischen zwei Isocyanatgruppen innerhalb des Polyisocyanats soll 220 bis 570 betragen. Auch diese Art der Steuerung der Vernetzungsdichte über die Kettenlänge innerhalb des Polyisocyanats dürfte das bekannte Problem, dass entweder die Klebkraft insbesondere für Papierverklebungen unzureichend ist, oder aber eine Tendenz zur Ausbildung von Fettflecken festzustellen ist, nicht reduzieren.

Auch in US 6,040,028 A (Cline et al., Bayer) wird ein Polyurethan-Klebstoff (Kontaktklebstoff) über das Molekulargewicht zwischen Vernetzungspunkten definiert. Vorgeschrieben wird ein Molekulargewicht zwischen 7000 und 16000. Weitere Einschränkungen werden unter anderem dahingehend gemacht, dass 0 bis 10 % der Polyole ein Molekulargewicht von 60 bis 400 haben müssen und 90 bis 100 % der Polyole ein Molekulargewicht von 1800 bis 12000.
Auch hier muss die für haftklebrige Polyurethane typische Durchfettungsneigung angenommen werden, da die Vernetzungsdichte relativ gering ist und keine Hinweise auf eine mögliche Lösung des Problems gegeben werden.

In WO 01/62818 A1 (Hansen et al., 3M) wird vorgeschlagen, zur Herstellung eines Polyurethan-Haftklebstoffs zwei Polyole oder anderweitige mit NCO-Gruppen reagierende Materialien mit Isocyanaten umzusetzen, wobei sich die mit den Isocyanaten reagierenden Komponenten dahingehend voneinander unterscheiden, dass eine ein Molekulargewicht größer 2000 und eine ein Molekulargewicht kleiner 2000 hat.

Derartige Haftklebstoffe sind unter anderem aus den Beispielen in US 5,227,409 A und US 3,437,622 A bekannt, auch hinsichtlich der Einschränkung (gemäß Unteranspruch 5), dass es sich bei den mit den Isocyanaten reagierenden Komponenten fast ausschließlich um Diole handelt. Ferner sind derart zusammengesetzte Polyurethane auch bereits in den Beispielen in EP 1 095 993 A1 und EP 1 101 807 A1 vorbeschrieben, wobei es sich in den letztgenannten Beispielen nicht um Zusammensetzungen zur Erzielung von Haftklebstoffen handelt. Das vorgeschlagene Reaktionsprodukt in WO 01/62818 A1 ist somit nicht eindeutig ein Haftklebstoff. Hinweise zur Lösung des Durchfettungsproblems werden nicht gegeben. Hinweise zur Erzielung von Transparenz werden ebenfalls nicht gegeben.

Aufgabe der Erfindung ist es, einen verbesserten Haftklebstoff zur Verfügung zu stellen, der die geschilderten Nachteile des Standes der Technik nicht oder nicht in dem Maße zeigt.
Aufgabe der Erfindung ist es weiterhin, einen Haftklebstoff zur Verfügung zu stellen, mit dem Papier, Pappe oder andere leichte Gegenstände des täglichen Gebrauchs sicher auf sich selbst oder andere Untergründe geklebt und rückstandsfrei wieder abgelöst werden können, ohne dass das Papier, die Pappe, die Gegenstände oder die Untergründe beim Ablösen geschädigt werden, welcher insbesondere transparent, lichtstabil, mehrfach verwendbar und abwaschbar ist. Insbesondere soll der Haftklebstoff nach dem Entfernen keine fettig aussehenden Flecken auf dem Papier, der Pappe, den Gegenständen oder dem Untergrund hinterlassen.
Aufgabe der Erfindung ist es weiterhin, einen Haftklebstoff zur Verfügung zu stellen, mit dem leichte bis mittelschwere Gegenstände auch unter hohen Scherbelastungen dauerhaft auf sich selbst oder andere Untergründe geklebt werden können.

Gelöst werden diese Aufgaben durch einen Haftklebstoff auf Basis einer Mischung aus einem chemisch vernetzten Polyurethan und mindestens einem Kohlenwasserstoffharz, wie er in dem Hauptanspruch niedergelegt ist. Gegenstand der Unteransprüche sind dabei vorteilhafte Weiterbildungen der Haftklebstoffe, Verfahren zur Herstellung derselben sowie Verwendungsmöglichkeiten.

Demgemäß betrifft die Erfindung einen Haftklebstoff auf Basis einer Mischung aus einem chemisch vernetzten Polyurethan und mindestens einem Kohlenwasserstoffharz, wobei sich das chemisch vernetzte Polyurethan aus folgenden in Gegenwart des Kohlenwasserstoffharzes beziehungsweise der Kohlenwasserstoffharze katalytisch miteinander zur Reaktion gebrachten Ausgangsstoffen in den angegebenen Verhältnissen zusammensetzt:
a.)mindestens einem aliphatischen oder alicyclischen Polyisocyanat, wobei deren Funktionalität jeweils kleiner oder gleich drei, bevorzugt zwei ist,
b.)einer Kombination aus mindestens einem Polypropylenglykol-Diol und einem Polypropylenglykol-Triol, wobei das Verhältnis der Anzahl der Isocyanat-Gruppen zur Gesamtanzahl der Hydroxylgruppen zwischen 0,8 und 1,15, bevorzugt zwischen 0,95 und 1,05 liegt, wobei das Verhältnis der Anzahl der Hydroxylgruppen der Diol-Komponente zu der Anzahl der Hydroxylgruppen der Triol-Komponente zwischen 0,8 und 9,0, bevorzugt zwischen 1,0 und 4,0 liegt,
wobei die Diole und Triole alternativ jeweils wie folgt ausgewählt und kombiniert werden:
- Diole mit einem mittleren zahlengemittelten Molekulargewicht Mₙ von kleiner oder gleich 1000 werden mit Triolen kombiniert, deren mittleres zahlengemitteltes Molekulargewicht Mₙ größer oder gleich 1000, bevorzugt größer oder gleich 3000 ist,
- Diole mit einem mittleren zahlengemittelten Molekulargewicht von größer 1000 werden mit Triolen kombiniert, deren mittleres zahlengemitteltes Molekulargewicht kleiner 1000 ist.
Erfindungswesentlich ist, dass mindestens ein Kohlenwasserstoffharz ein Monomerharz vom Typ Styrol / α-Methylstyrol mit einem mittleren zahlengemittelten Molekulargewicht Mₙ zwischen 200 und 6000, bevorzugt zwischen 500 und 2000 ist, wobei der Gewichtsanteil des Harzes in der Mischung größer 0 % ist und bis maximal einschließlich 55 % reicht.

In einer vorteilhaften Ausführungsform der Erfindung ist der Gewichtsanteil des Harzes in der Mischung größer 0 % und reicht bis zu 30 %.
In einer weiteren vorteilhaften Ausführungsform der Erfindung ist der Gewichtsanteil des Harzes in der Mischung größer/gleich 30 % und reicht bis maximal einschließlich 55 %.

Um Polyurethane mit ausreichender Lichtstabilität zu erzeugen, müssen bekanntermaßen aliphatische oder alicyclische Polyisocyanate beziehungsweise Polyisocyanate mit nicht aromatisch gebundenen Isocyanatgruppen verwendet werden. Überraschend wurde gefunden, dass aliphatische oder alicyclische Polyisocyanate geeignet sind, um auch das sonstige gewünschte Eigenschaftsprofil der Polyurethan-Haftklebstoffe entsprechend der Aufgabe der Erfindung zu erzeugen. Insbesondere die hohe Transparenz verbunden mit den guten Klebeigenschaften lässt sich durch Verwendung von aliphatischen oder alicyclischen Polyisocyanaten einstellen.

In einer vorteilhaften Ausführungsform werden aliphatische oder alicyclische Diisocyanate verwendet. Besonders vorteilhaft ist die Verwendung von aliphatischen oder alicyclischen Diisocyanaten mit jeweils unsymmetrischer Molekülstruktur, in denen also die beiden Isocyanatgruppen jeweils eine unterschiedliche Reaktivität besitzen. Insbesondere die sonst für haftklebrige Polyurethane typische Neigung, auf Papier oder Pappe fettig aussehende Flecken zu hinterlassen, wird durch den Einsatz von aliphatischen oder alicyclischen Diisocyanaten mit unsymmetrischer Molekülstruktur deutlich reduziert. Unsymmetrische Molekülstruktur bedeutet, dass das Molekül keine Symmetrieelemente (zum Beispiel Spiegelebenen, Symmetrieachsen, Symmetriezentren) besitzt, dass also keine Symmetrieoperation ausgeführt werden kann, die ein mit dem Ausgangsmolekül deckungsgleiches Molekül erzeugt.

Beispiele geeigneter, erfindungsgemäßer Polyisocyanate sind Butan-1,4-diisocyanat, Tetramethoxybutan-1,4-diisocyanat, Hexan-1,6-diisocyanat, Ethylendiisocyanat, 2,2,4-Trimethyl-hexamethylendiisocyanat, Ethylethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Isocyanatomethyl-3-isocyanato-1,5,5-trimethylcyclohexan (Isophorondiisocyanat, abgekürzt IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, chlorierte, bromierte, schwefel- oder phosphorhaltige aliphatische oder alicyclische Diisocyanate, sowie Derivate der aufgeführten Diisocyanate, insbesondere dimerisierte oder trimerisierte Typen.

In einer besonders bevorzugten Ausführungsform wird Isophorondiisocyanat verwendet.

Hinsichtlich der stofflichen und mengenmäßigen Zusammensetzung der mit dem Diisocyanat zur Reaktion gebrachten Edukte wurde überraschend gefunden, dass Kombinationen aus mindestens einem Polypropylenglykol-Diol mit mindestens einem Polypropylenglykol-Triol geeignet sind, um Polyurethane mit dem gewünschten Eigenschaftsprofil entsprechend der Aufgabe der Erfindung zu erzeugen, wenn das Verhältnis der Anzahl der Hydroxylgruppen des Diols zu der Anzahl der Hydroxylgruppen des Triols zwischen 0,8 und 9,0, bevorzugt zwischen 1,4 und 4,0 liegt, wenn weiterhin das Verhältnis der Anzahl der Isocyanat-Gruppen zur Gesamtanzahl der Hydroxylgruppen zwischen 0,8 und 1,15, bevorzugt zwischen 0,95 und 1,05 liegt, wenn also weder ein signifikanter Isocyanat-Überschuss noch ein signifikanter Isocyanat-Unterschuss vorliegt und wenn die Diole und Triole alternativ jeweils wie folgt ausgewählt und kombiniert werden:
- Diole mit einem mittleren zahlengemittelten Molekulargewicht Mₙ von kleiner oder gleich 1000 werden mit Triolen kombiniert, deren mittleres zahlengemitteltes Molekulargewicht Mₙ größer oder gleich 1000, bevorzugt größer oder gleich 3000 ist
- Diole mit einem mittleren zahlengemittelten Molekulargewicht von größer 1000 werden mit Triolen kombiniert, deren mittleres zahlengemitteltes Molekulargewicht kleiner 1000 ist

Als Polypropylenglykole können alle handelsüblichen Polyether auf Basis von Propylenoxid und eines difunktionellen Starters im Falle der Diole und eines trifunktionellen Starters im Falle der Triole eingesetzt werden. Darunter fallen sowohl die konventionell, das heißt im Regelfall mit einem basischen Katalysator wie zum Beispiel Kaliumhydroxid hergestellten Polypropylenglykole, als auch die besonders reinen Polypropylenglykole, die DMC (Double metal cyanide)-katalysiert hergestellt werden, und deren Herstellung zum Beispiel in US 5,712,216 A, US 5,693,584 A, WO 99/56874 A1, WO 99/51661 A1, WO 99/59719 A1, WO 99/64152 A1, US 5,952,261 A, WO 99/64493 A1 und WO 99/51657 A1 beschrieben wird.
Charakteristisch an den DMC-katalysierten Polypropylenglykolen ist, dass die "nominale" beziehungsweise theoretische Funktionalität von exakt 2 im Falle der Diole beziehungsweise exakt 3 im Falle der Triole auch tatsächlich annähernd erreicht wird. Bei den konventionell hergestellten Polypropylenglykolen ist die "wahre" Funktionalität stets etwas geringer als die theoretische, und zwar insbesondere bei Polypropylenglykolen mit höherem Molekulargewicht. Ursache ist eine Umlagerungs-Nebenreaktion des Propylenoxids zum Allylalkohol.

Weiterhin können auch alle Polypropylenglykol-Diole beziehungsweise -Triole eingesetzt werden, in denen Ethylenoxid miteinpolymerisiert ist, was in vielen handelsüblichen Polypropylenglykolen der Fall ist, um eine erhöhte Reaktivität gegenüber Isocyanaten zu erzielen.

Hinsichtlich der Auswahl der Harze wurde überraschend gefunden, dass die gewünschten Eigenschaften, insbesondere die hohe Transparenz, aber auch die sehr gute Scherfestigkeit erzielt werden, wenn mindestens ein Kohlenwasserstoffharz ein Monomerharz vom Typ Styrol / α-Methylstyrol mit einem mittleren zahlengemittelten Molekulargewicht Mₙ zwischen 200 und 6000, bevorzugt zwischen 500 und 2000 eingesetzt wird, wobei der Gewichtsanteil dieses Harzes in der Mischung in einer bevorzugten Ausführungsform größer 0 % bis maximal 30 % und in einer anderen bevorzugten Ausführungsform größer 30 % bis maximal 55 % beträgt. Das gewichtsgemittelte Molekulargewicht M_{w} entsprechend geeigneter Monomerharze vom Typ Styrol oder α-Methylstyrol liegt zwischen 300 und 18000, bevorzugt zwischen 700 und 6000. Die CAS-Registriernummer der Monomerharze vom Typ Styrol / α-Methylstyrol lautet 9011-11-4. Sie können auch als Polymerharze auf Basis von Ethenylbenzol mit (1-Methylethenyl)benzol-Anteilen bezeichnet werden.

Durch Variation des Verhältnisses der Anzahl der Hydroxylgruppen des Diols zu der des Triols innerhalb der gesetzten Grenzen sowie durch Variation des Harzanteils innerhalb der gesetzten Grenzen kann die Klebkraft anwendungsgerecht eingestellt werden. Überraschend wurde gefunden, dass die Klebkraft innerhalb der angegebenen Grenzen bis kurz vor dem Grenzbereich zunimmt, je höher das Verhältnis der Anzahl der Diol-OH-Gruppen zu der der Triol-OH-Gruppen ist.

Der Klebkraftbereich, der innerhalb der angegeben Grenzen eingestellt werden kann, liegt ungefähr zwischen 1,0 und 25,0 N/cm, innerhalb der bevorzugten Grenzen zwischen ca. 1,5 und 20,0 N/cm.

In einer möglichen Ausführungsform enthält der polyurethanbasierte Haftklebstoff weitere Rezeptierungsbestandteile wie zum Beispiel Katalysatoren, Alterungsschutzmittel (Antioxidantien), Lichtschutzmittel, UV-Absorber, rheologische Additive sowie sonstige Hilfs- und Zusatzstoffe.

Bei der Auswahl dieser Stoffe ist darauf zu achten, dass diese Stoffe keine Migrationstendenz zum zu verklebenden Substrat hin haben, damit es nicht auf diese Weise zur Fleckenbildung kommt. Aus dem gleichen Grund ist die Konzentration dieser Stoffe, insbesondere der flüssigen, in der Gesamtzusammensetzung möglichst niedrig zu halten. Die zusätzliche Verwendung von Weichmachern ist möglich, sollte aber eher vermieden werden.

Um die Reaktion zwischen der Isocyanat-Komponente und der mit dem Isocyanat reagierenden Komponente zu beschleunigen, können alle dem Fachmann bekannten Katalysatoren wie zum Beispiel tertiäre Amine oder zinnorganische Verbindungen eingesetzt werden. Als besonders vorteilhaft erweist es sich, wenn als Katalysator eine Bismut und Kohlenstoff enthaltende Verbindung, bevorzugt ein Bismutcarboxylat oder ein Bismutcarboxylat-Derivat eingesetzt wird.

Die Verwendung von Antioxidantien ist vorteilhaft, aber nicht zwingend notwendig.
Zu den geeigneten Antioxidantien zählen zum Beispiel sterisch gehinderte Phenole, Hydrochinon-Derivate, Amine, organische Schwefelverbindungen oder organische Phosphorverbindungen.

Lichtschutzmittel und UV-Absorber können optional ebenso eingesetzt werden.

Als Lichtschutzmittel finden die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verwendung.

Beispiele für rheologische Additive sind pyrogene Kieselsäuren, Schichtsilikate (Bentonite), hochmolekulare Polyamidpulver oder Rizinusölderivat-Pulver.

Der Haftklebstoff wird in einer bevorzugten Ausführungsform nach dem im Folgenden beschriebenen Verfahren kontinuierlich hergestellt:

Es werden in einem Behälter A im Wesentlichen die vorgemischte Polypropylenglykol-Kombination (Polyol-Komponente) und in einem Behälter B im Wesentlichen die Isocyanat-Komponente vorgelegt, wobei das Kohlenwasserstoffharz beziehungsweise die Kohlenwasserstoffharze sowie gegebenenfalls die weiteren Rezeptierungsbestandteile diesen Komponenten bereits zuvor in einem üblichen Mischverfahren zugemischt wurden.
Die Polyol- und die Isocyanat-Komponente werden über Präzisionspumpen durch den Mischkopf oder das Mischrohr einer Mehrkomponenten-Misch- und Dosieranlage gefördert, dort homogen vermischt und somit zur Reaktion gebracht. Die somit gemischten, miteinander chemisch reagierenden Komponenten werden unmittelbar danach auf ein bahnförmiges Trägermaterial aufgebracht, das sich bevorzugt mit konstanter Geschwindigkeit bewegt. Die Art des Trägermaterials richtet sich nach dem herzustellenden Artikel. Das mit der reagierenden, harzhaltigen Polyurethanmasse beschichtete Trägermaterial wird durch einen Wärmekanal geführt, in dem die harzhaltige Polyurethanmasse zum Haftklebstoff aushärtet. Das Auftragsgewicht der Polyurethanmasse ist frei wählbar. Es richtet sich nach dem herzustellenden Artikel. Das beschichtete Trägermaterial wird abschließend in einer Wickelstation aufgewickelt.

Das beschriebene Verfahren ermöglicht es, lösemittel- und wasserfrei zu arbeiten. Das lösemittel- und wasserfreie Arbeiten ist die bevorzugte Verfahrensweise, ist aber nicht zwingend notwendig. Um zum Beispiel besonders geringe Auftragsgewichte zu erzielen, können die Komponenten in geeigneter Weise verdünnt werden.

Die erfindungsgemäßen Haftklebstoffe sind zur Herstellung von selbstklebenden Artikeln wie zum Beispiel Klebebändern, Klebfilmen, Klebstreifen, Klebfolien oder Klebepads hervorragend geeignet.

Der allgemeine Ausdruck Klebeband umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Der Haftklebstoff kann ein- oder beidseitig auf Trägermaterialien aufgebracht werden, Als Basis für das Trägermaterial werden die dem Fachmann geläufigen und üblichen Trägermaterialien wie Folien aus Polyethylen, Polypropylen, verstrecktes Polypropylen, Polyvinylchlorid, Polyester und besonders bevorzugt Polyethylenterephthalat (PET) verwendet. Hierbei kann es sich um Monofolien, coextrudierte oder laminierte Folien handeln. Diese Aufzählung ist beispielhaft und nicht abschließend. Die Oberfläche der Folien kann durch geeignete Verfahren wie zum Beispiel Prägen, Ätzen oder Lasern mikrostrukturiert sein.
Die Trägerfolien oder einzelne Schichten der Trägerfolien können weiterhin mit einem Gas geschäumt sein oder durch Zugabe von expandierfähigen oder bereits expandierten Mikroballons, Mikroglashohl- und -vollkugeln eine Volumenveränderung erfahren haben.

Falls die Polyurethanmasse auf bahnförmigen Trägermaterialien aufgebracht werden soll, können, um die Verankerung der Polyurethanmasse auf den bahnförmigen Trägermaterialien zu verbessern, alle bekannten Methoden der Oberflächenvorbehandlung wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus auf das Trägermaterial aufgetragen werden kann als auch im Extrusions- oder Coextrusionsverfahren.
Um die Abrolleigenschaften der gewickelten Rolle zu verbessern, kann die Rückseite des bahnförmigen Materials mit einem Trennlack (Releaselack) vorbeschichtet werden oder aber eine trennende co- oder aufextrudierte Rückseitenbeschichtung tragen.

Die Dicke der Klebepads, insbesondere wenn die Klebepads aus einer Schicht des erfindungsgemäßen Haftklebstoffes gebildet wird, liegt typischerweise zwischen 50 µm bis 3000 µm, bevorzugt 100 µm bis 2000 µm, besonders bevorzugt 500 µm bis 1500 µm. Die Klebepads sind bevorzugt in Form geometrischer Figuren gestanzt wie Rechtecke, Quadrate, Kreise, Ellipsen, Rauten und ähnlichen. Die Fläche bei den üblichen Anwendungen beträgt typischerweise 0,5 bis 500 cm², bevorzugt 0,8 bis 50,0 cm², besonders bevorzugt 0,9 bis 5,0 cm².

Erfindungsgemäße Haftklebstoffe zeigen hervorragende Produkteigenschaften, die auch für den Fachmann derartig nicht vorherzusehen waren.

Der Haftklebstoff mit einem Gewichtsanteil des Harzes in der Mischung größer 0 % und bis zu 30 % ist geeignet, um beispielsweise Notizzettel, Papierblätter, Kalenderblätter, Streifen, Karten oder Schachteln aus Pappe, Kartonmaterial oder Kunststoff, andere kleine Gebrauchsgegenstände aus Kunststoff, Holz, Glas, Stein oder Metall sicher auf vielen Untergründen oder auf sich selbst zu befestigen.

Der Haftklebstoff dieser Ausführungsform kann jederzeit, auch nach Wochen oder Monaten, wieder von den Gegenständen, Materialien oder Untergründen, auf die er geklebt wurde, problemlos abgelöst werden, ohne dass diese Gegenstände, Materialien oder Untergründe geschädigt werden. Insbesondere ist der Haftklebstoff transparent. Er hinterlässt nach dem Ablösen keine Rückstände oder fettig aussehende Flecken auf den verklebten Gegenständen, Materialien oder Untergründen, auch nicht auf stark saugfähigem Papier.

Der Haftklebstoff dieser Ausführungsform ist mehrfach verwendbar, ohne dass es zu Einbußen in der Klebkraft kommt. Wird der Haftklebstoff unverklebt und ohne Schutzabdeckung längere Zeit in einer normalen Umgebung aufbewahrt, so staubt er naturgemäß ein, so dass sich seine Klebkraft dadurch reduziert. Eine solche Staubschicht ist mit normalem Leitungswasser jederzeit leicht wieder entfernbar. Nach dem Trocknen ist die ursprüngliche Klebkraft sofort wieder in vollem Umfang hergestellt. Selbst große Mengen an Staub, Sand oder Pulvern aller Korngrößen lassen sich durch Abwaschen leicht wieder entfernen.

Dadurch, dass der Haftklebstoff lichtstabil ist, kann er auch zur Verklebung auf licht- und sonnenexponierten Gegenständen, Materialien oder Untergründen eingesetzt werden, zum Beispiel auf oder hinter Fensterscheiben oder Autoscheiben. Generell ist der Haftklebstoff für Innen- wie für Außenanwendungen gleichermaßen geeignet.

Der Haftklebstoff mit einem Gewichtsanteil des Harzes in der Mischung größer/gleich 30 % und bis zu 55 % ist geeignet, leichte bis mittelschwere Gegenstände auch unter hohen Scherbelastungen dauerhaft auf sich selbst oder andere Untergründe zu kleben.

Im Folgenden soll die Erfindung anhand von Beispielen erläutert werden, ohne diese damit allerdings einschränken zu wollen.

Die folgenden Prüfmethoden wurden eingesetzt, um die nach den beschriebenen Verfahren hergestellten Muster kurz zu charakterisieren.
- Die Molekulargewichtsbestimmungen der gewichtsmittleren Molekulargewichte M_{W} und der zahlengemittelten Molekulargewichte Mₙ der Kohlenwasserstoffharze erfolgte mittels Gelpermeationschromatographie (GPC). Als Eluent wurde THF (Tetrahydrofuran) mit 0,1 Vol.-% Trifluoressigsäure eingesetzt. Die Messung erfolgte bei 25°C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.
- Die Bestimmung der zahlengemittelten Molekulargewichte Mₙ der Polyole erfolgte über die Bestimmung der Hydroxylzahl (Endgruppenbestimmung) nach DIN 53240 und anschließende Berechnung von Mₙ auf Basis der jeweiligen nominalen Funktionalität der Polyole.
- Die Prüfmuster wurden jeweils hergestellt, indem die zunächst flüssige, reaktive Polyurethan-Haftklebstoffmasse mit einem Auftragsgewicht von 50 g/m² auf eine 26 µm dicke Polyesterfolie beschichtet und bei 100°C ausgehärtet wurde. Die Messungen erfolgten nach einer "Reifezeit" (bei Raumtemperatur) von einer Woche.
- Die Klebkraft wurde nach PSTC-101 bestimmt. Nach dieser Methode wird der Verbund aus Haftklebstoffschicht und Polyesterfolie auf den Haftgrund (Stahl) aufgebracht und anschließend unter definierten Bedingungen mittels einer Zugprüfmaschine abgezogen. Der Abzugswinkel beträgt jeweils 180°, die Abzugsgeschwindigkeit 300 mm/min. Die zum Abziehen erforderliche Kraft ist die Klebkraft, welche in der Einheit N/cm angegeben wird.
- Der Schertest erfolgte nach der Prüfvorschrift PSTC-107. Nach dieser Methode wird der Verbund aus Haftklebstoffschicht und Polyesterfolie auf den Haftgrund (Stahl) aufgebracht und anschließend einer konstanten Scherbelastung ausgesetzt. Ermittelt wird die Haltedauer in Minuten.
   Die Verklebungsfläche betrug jeweils 13 x 20 mm. Die Scherbelastung dieser Verklebungsfläche betrug entweder 1 kg oder 2 kg (in den Einzelbeispielen angegeben).
- Die Tackmessung (Messung der Oberflächenklebrigkeit) erfolgt nach der Rolling Ball Methode gemäß der Prüfvorschrift PSTC-6.
   Die Messvorrichtung besteht demgemäß im Wesentlichen aus einer schiefen Ebene, einer Stahlkugel und einem definierten Edelstahluntergrund. Die Stahlkugel von 5,6 g (11 mm Durchmesser) rollt unter einem Neigungswinkel von 21,5° die schiefe Ebene (Höhe 65 mm) hinunter auf den Haftklebstoff und wird von diesem durch seine Haftklebrigkeit abgebremst. Die Laufstrecke der Kugel auf der Haftklebstoffoberfläche gilt als Maß für den Tack. Der Tack ist somit umgekehrt proportional der zurückgelegten Strecke.
- Die Prüfung der Lichtbeständigkeit erfolgte mit einer so genannten Sonnenlichtlampe der Firma Osram mit der Bezeichnung ULTRA-VITALUX ®, Leistungsaufnahme 300 W. Die Proben wurden aus einer Entfernung von 50 cm ununterbrochen offen bestrahlt. Die Temperatur am Ort der Probe betrug dabei jeweils ca. 60°C. Beurteilt wurde die farbliche Veränderung des Haftklebstoffs sowie die Klebkraft-Veränderung jeweils nach einer Woche Bestrahlungsdauer. Dies entspricht ungefähr einer jeweils 5-fachen ununterbrochenen realen Sommersonnenbelastung in Mitteleuropa.

### Beispiele

Die Beschichtungen erfolgten in den Beispielen auf einer üblichen Laborbeschichtungsanlage für kontinuierliche Beschichtungen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120°C frei wählbar.

Es wurde eine übliche Mehrkomponenten-Misch- und Dosieranlage mit einem dynamischen Mischsystem verwendet. Der Mischkopf war für zwei flüssige Komponenten konzipiert. Der Mischrotor hatte eine variable Drehzahl bis max. ca. 5000 U/min. Bei den Dosierpumpen dieser Anlage handelte es sich um Zahnradpumpen mit einer Förderleistung von max. ca. 2 l/min.

Die A-Komponenten wurden in einem üblichen beheiz- und evakuierbaren Mischkessel gefertigt. Während des jeweils ca. zweistündigen Mischvorgangs wurde die Temperatur der Mischung auf ca. 70°C bis 100°C eingestellt und zur Entgasung der Komponenten wurde Vakuum angelegt.

In Tabelle 1 sind die zur Herstellung Haftklebstoffe verwendeten Basismaterialien aufgeführt, und zwar jeweils mit Handelsnamen und Hersteller. Die genannten Rohstoffe sind alle frei im Handel erhältlich.

**Tabelle 1: Zur Herstellung der Polyurethan-Haftklebstoffe eingesetzte Basismaterialien**

| Handelsname | Chemische Basis | mittleres zahlengemitteltes Molekulargewicht Mₙ | OH- bzw. NCO-Zahl (mmol OH/kg bzw. mmol NCO/kg | Hersteller/Lieferant |
|---|---|---|---|---|
| Voranol P 400 ® | Polypropylenglykol, Diol | 400 | 4643 | Dow |
| Desmophen1112 BD ® | Polypropylenglykol, Diol | 1000 | 1977 | Bayer |
| Acclaim 4220 N ® | Polypropylenglykol, Diol, hochrein, DMC -katalysiert hergestellt | 4000 | 500 | Bayer |
| Desmophen 1380 BT ® | Polypropylenglykol, Triol | 450 | 6774 | Bayer |
| Voranol CP 4755 ® | Polypropylenglykol, Triol | 4700 | 615 | Dow |
| Voranol CP 6055 ® | Polypropylenglykol, Triol | 6000 | 490 | Dow |
| Vestanat IPDI ® | Isophorondiisocyanat | | 8998 | Degussa |
| Desmodur W ® | Dicyclohexylmethandiisocyanat | | 7571 | Bayer |
| Kristalex F 85 ® | Monomerharz vom Typ Styrol / α-Methylstyrol | 750 | | Eastman |
| Kristalex F 100 ® | Monomerharz vom Typ Styrol / α-Methylstyrol | 800 | | Eastman |
| Piccotac 1100 E ® | Aliphatisches Kohlenwasserstoffharz | 950 | | Eastman |
| Regalite R 1100 ® | Vollhydriertes Kohlenwasserstoffharz | 600 | | Eastman |
| Tinuvin 292 ® | sterisch gehindertes Amin, Licht- und Alterungsschutzmittel | | | Ciba |
| Tinuvin 400 ® | Triazin-Derivat, UV-Schutzmittel | | | Ciba |
| | Bismuttrisneodecanoat CAS-Nr. 34364-26-6 | | | |
| Mark DBTL ® | Dibutylzinndilaurat | | | Nordmann, Rassmann |

### Beispiel 1

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 14,9 | 69,35 mmol OH |
| | Voranol CP 6055 ® | 60,7 | 29,72 mmol OH |
| | Kristalex F85 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 11,0 | 99,07 mmol NCO |

Die Prüfmuster (50 g/m² Polyurethan-Haftklebstoff auf einer 26 µm dicken Polyesterfolie, siehe oben) erzielten eine Klebkraft auf Stahl von 2,9 N/cm. Im Schertest wurde bei 1 kg Scherbelastung eine Haltezeit von größer 10000 Minuten erreicht. Die Laufstrecke der Kugel im Rolling Ball Test betrug 28 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 2

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 7,5 | 34,94 mmol OH |
| | Voranol CP 6055 ® | 71,3 | 34,94 mmol OH |
| | Kristalex F85 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 7,8 | 69,88 mmol NCO |

Die Prüfmuster (50 g/m² Polyurethan-Haftklebstoff auf einer 26 µm dicken Polyesterfolie, siehe oben) erzielten eine Klebkraft auf Stahl von 1,3 N/cm. Im Schertest wurde bei 1 kg Scherbelastung eine Haltezeit von 8520 Minuten erreicht. Die Laufstrecke der Kugel im Rolling Ball Test betrug 62 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 3

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 4,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 21,6 | 100,17 mmol OH |
| | Voranol CP 6055 ® | 51,1 | 25,04 mmol OH |
| | Kristalex F85 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 13,9 | 125,22 mmol NCO |

Die Prüfmuster (50 g/m² Polyurethan-Haftklebstoff auf einer 26 µm dicken Polyesterfolie, siehe oben) erzielten eine Klebkraft auf Stahl von 4,5 N/cm. Im Schertest wurde bei 1 kg Scherbelastung eine Haltezeit von 4500 Minuten erreicht. Die Laufstrecke der Kugel im Rolling Ball Test betrug 13 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 4

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 13,2 | 61,34 mmol OH |
| | Voranol CP 6055 ® | 53,7 | 26,29 mmol OH |
| | Kristalex F85 ® | 20,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 9,7 | 87,63 mmol NCO |

Die Prüfmuster (50 g/m² Polyurethan-Haftklebstoff auf einer 26 µm dicken Polyesterfolie, siehe oben) erzielten eine Klebkraft auf Stahl von 4,7 N/cm. Im Schertest wurde bei 1 kg Scherbelastung eine Haltezeit von größer 10000 Minuten erreicht. Die Laufstrecke der Kugel im Rolling Ball Test betrug 15 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 5

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 12,4 | 57,34 mmol OH |
| | Voranol CP 6055 ® | 50,1 | 24,57 mmol OH |
| | Kristalex F85 ® | 25,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 9,1 | 81,91 mmol NCO |

Die Prüfmuster (50 g/m² Polyurethan-Haftklebstoff auf einer 26 µm dicken Polyesterfolie, siehe oben) erzielten eine Klebkraft auf Stahl von 5,3 N/cm. Im Schertest wurde bei 1 kg Scherbelastung eine Haltezeit von größer 10000 Minuten erreicht. Die Laufstrecke der Kugel im Rolling Ball Test betrug 8 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 6

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 12,9 | 59,90 mmol OH |
| | Voranol CP 6055 ® | 52,4 | 25,67 mmol OH |
| | Kristalex F85 ® | 20,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Desmodur W ® | 11,3 | 85,58 mmol NCO |

Die Prüfmuster (50 g/m² Polyurethan-Haftklebstoff auf einer 26 µm dicken Polyesterfolie, siehe oben) erzielten eine Klebkraft auf Stahl von 4,5 N/cm. Im Schertest wurde bei 1 kg Scherbelastung eine Haltezeit von größer 10000 Minuten erreicht. Die Laufstrecke der Kugel im Rolling Ball Test betrug 22 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 7

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 13,2 | 61,34 mmol OH |
| | Voranol CP 6055 ® | 53,7 | 26,29 mmol OH |
| | Kristalex F85 ® | 20,0 | |
| | Mark DBTL ® | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 9,7 | 87,63 mmol NCO |

Die Prüfmuster (50 g/m² Polyurethan-Haftklebstoff auf einer 26 µm dicken Polyesterfolie, siehe oben) erzielten eine Klebkraft auf Stahl von 7,2 N/cm. Im Schertest wurde bei 1 kg Scherbelastung eine Haltezeit von 860 Minuten erreicht. Die Laufstrecke der Kugel im Rolling Ball Test betrug 9 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich nach einem halben Jahr Verklebungszeit von einigen der genannten Substrate ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 8

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 14,9 | 69,35 mmol OH |
| | Voranol CP 6055 ® | 60,7 | 29,72 mmol OH |
| | Kristalex F100 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 11,0 | 99,07 mmol NCO |

Die Prüfmuster (50 g/m² Polyurethan-Haftklebstoff auf einer 26 µm dicken Polyesterfolie, siehe oben) erzielten eine Klebkraft auf Stahl von 2,5 N/cm. Im Schertest wurde bei 1 kg Scherbelastung eine Haltezeit von größer 10000 Minuten erreicht. Die Laufstrecke der Kugel im Rolling Ball Test betrug 25 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 9

Der erfindungsgemäße Polyurethan-Haftklebstoff setzt sich wie folgt zusammen:
NCO OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 13,2 | 61,34 mmol OH |
| | Voranol CP 6055 ® | 53,7 | 26,29 mmol OH |
| | Kristalex F100 ® | 20,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 9,7 | 87,63 mmol NCO |

Die Prüfmuster (50 g/m² Polyurethan-Haftklebstoff auf einer 26 µm dicken Polyesterfolie, siehe oben) erzielten eine Klebkraft auf Stahl von 4,1 N/cm. Im Schertest wurde bei 1 kg Scherbelastung eine Haltezeit von größer 10000 Minuten erreicht. Die Laufstrecke der Kugel im Rolling Ball Test betrug 31 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 10

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 13,2 | 61,34 mmol OH |
| | Voranol CP 6055 ® | 53,7 | 26,29 mmol OH |
| | Kristalex F85 ® | 10,0 | |
| | Kristalex F100 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 9,7 | 87,63 mmol NCO |

Die Prüfmuster (50 g/m² Polyurethan-Haftklebstoff auf einer 26 µm dicken Polyesterfolie, siehe oben) erzielten eine Klebkraft auf Stahl von 5,1 N/cm. Im Schertest wurde bei 1 kg Scherbelastung eine Haltezeit von größer 10000 Minuten erreicht. Die Laufstrecke der Kugel im Rolling Ball Test betrug 20 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 11

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 10,6 | 49,33 mmol OH |
| | Voranol CP 6055 ® | 43,2 | 21,14 mmol OH |
| | Kristalex F85 ® | 35,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 7,8 | 70,47 mmol NCO |

Die Prüfmuster (50 g/m² Polyurethan-Haftklebstoff auf einer 26 µm dicken Polyesterfolie, siehe oben) erzielten eine Klebkraft auf Stahl von 4,9 N/cm. Im Schertest wurde bei 1 kg Scherbelastung eine Haltezeit von größer 10000 Minuten und bei 2kg Scherbelastung eine Haltezeit von größer 5800 Minuten erreicht. Die Laufstrecke der Kugel im Rolling Ball Test betrug 21 mm. Nach einer Woche Bestrahlung mit der Sonnenlichtlampe traten keine Veränderungen auf, weder farblich noch in der Klebkraft. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser wieder leicht entfernen. Die Klebkraft lag anschließend wieder auf dem ursprünglichen Niveau.

### Beispiel 12

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 9,4 | 43,72 mmol OH |
| | Voranol CP 6055 ® | 38,3 | 18,74 mmol OH |
| | Kristalex F85 ® | 42,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 6,9 | 62,46 mmol NCO |

Die Prüfmuster (50 g/m² Polyurethan-Haftklebstoff auf einer 26 µm dicken Polyesterfolie, siehe oben) erzielten eine Klebkraft auf Stahl von 4,6 N/cm. Im Schertest wurde sowohl bei 1 kg Scherbelastung als auch bei 2kg Scherbelastung eine Haltezeit von größer 10000 Minuten erreicht. Die Laufstrecke der Kugel im Rolling Ball Test betrug 33 mm. Nach einer Woche Bestrahlung mit der Sonnenlichtlampe traten keine Veränderungen auf, weder farblich noch in der Klebkraft. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser wieder leicht entfernen. Die Klebkraft lag anschließend wieder auf dem ursprünglichen Niveau.

### Beispiel 13

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 9,2 | 42,70 mmol OH |
| | Voranol CP 6055 ® | 37,3 | 18,30 mmol OH |
| | Kristalex F85 ® | 42,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Desmodur W ® | 8,1 | 61,00 mmol NCO |

Die Prüfmuster (50 g/m² Polyurethan-Haftklebstoff auf einer 26 µm dicken Polyesterfolie, siehe oben) erzielten eine Klebkraft auf Stahl von 4,1 N/cm. Im Schertest wurde sowohl bei 1 kg Scherbelastung als auch bei 2kg Scherbelastung eine Haltezeit von größer 10000 Minuten erreicht. Die Laufstrecke der Kugel im Rolling Ball Test betrug 19 mm. Nach einer Woche Bestrahlung mit der Sonnenlichtlampe traten keine Veränderungen auf, weder farblich noch in der Klebkraft. Der Haftklebstoff war abwaschbar. Zur Prüfung wurde er mit feinkörnigem Sand und in einem zweiten Versuch mit feinkörnigem Talkum bestreut. Beide Stoffe ließen sich unter fließendem Wasser wieder leicht entfernen. Die Klebkraft lag anschließend wieder auf dem ursprünglichen Niveau.

### Beispiel 14

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 15,4 | 71,52 mmol OH |
| | Voranol CP 4755 ® | 49,8 | 30,65 mmol OH |
| | Kristalex F85 ® | 20,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 11,4 | 102,17 mmol NCO |

Die Prüfmuster (50 g/m² Polyurethan-Haftklebstoff auf einer 26 µm dicken Polyesterfolie, siehe oben) erzielten eine Klebkraft auf Stahl von 3,8 N/cm. Im Schertest wurde bei 1 kg Scherbelastung eine Haltezeit von größer 10000 Minuten erreicht. Die Laufstrecke der Kugel im Rolling Ball Test betrug 35 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 15

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 15,4 | 71,52 mmol OH |
| | Voranol CP 4755 ® | 49,8 | 30,65 mmol OH |
| | Kristalex F85 ® | 20,0 | |
| | Mark DBTL ® | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 11,4 | 102,17 mmol NCO |

Die Prüfmuster (50 g/m² Polyurethan-Haftklebstoff auf einer 26 µm dicken Polyesterfolie, siehe oben) erzielten eine Klebkraft auf Stahl von 6,9 N/cm. Im Schertest wurde bei 1 kg Scherbelastung eine Haltezeit von 1100 Minuten erreicht. Die Laufstrecke der Kugel im Rolling Ball Test betrug 19 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 16

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 4,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 21,7 | 100,68 mmol OH |
| | Voranol CP 4755 ® | 40,9 | 25,17 mmol OH |
| | Kristalex F85 ® | 20,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 14,0 | 125,85 mmol NCO |

Die Prüfmuster (50 g/m² Polyurethan-Haftklebstoff auf einer 26 µm dicken Polyesterfolie, siehe oben) erzielten eine Klebkraft auf Stahl von 4,5 N/cm. Im Schertest wurde bei 1 kg Scherbelastung eine Haltezeit von 3900 Minuten erreicht. Die Laufstrecke der Kugel im Rolling Ball Test betrug 24 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 17

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen1112 BD ® | 15,8 | 31,28 mmol OH |
| | Voranol CP 6055 ® | 63,8 | 31,28 mmol OH |
| | Kristalex F85 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 7,0 | 62,55 mmol NCO |

Die Prüfmuster (50 g/m² Polyurethan-Haftklebstoff auf einer 26 µm dicken Polyesterfolie, siehe oben) erzielten eine Klebkraft auf Stahl von 2,5 N/cm. Im Schertest wurde bei 1 kg Scherbelastung eine Haltezeit von 3800 Minuten erreicht. Die Laufstrecke der Kugel im Rolling Ball Test betrug 25 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 18

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 1,5

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen1112 BD ® | 23,3 | 45,97 mmol OH |
| | Voranol CP 4755 ® | 49,8 | 30,65 mmol OH |
| | Kristalex F85 ® | 15,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 8,5 | 76,62 mmol NCO |

Die Prüfmuster (50 g/m² Polyurethan-Haftklebstoff auf einer 26 µm dicken Polyesterfolie, siehe oben) erzielten eine Klebkraft auf Stahl von 3,1 N/cm. Im Schertest wurde bei 1 kg Scherbelastung eine Haltezeit von 6900 Minuten erreicht. Die Laufstrecke der Kugel im Rolling Ball Test betrug 34 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 19

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 5,66

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Desmophen 1380 BT ® | 20,3 | 137,17 mmol OH |
| | Acclaim 4220 N ® | 48,4 | 24,21 mmol OH |
| | Kristalex F85 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 17,9 | 161,38 mmol NCO |

Die Prüfmuster (50 g/m² Polyurethan-Haftklebstoff auf einer 26 µm dicken Polyesterfolie, siehe oben) erzielten eine Klebkraft auf Stahl von 6,8 N/cm. Im Schertest wurde bei 1 kg Scherbelastung eine Haltezeit von 890 Minuten erreicht. Die Laufstrecke der Kugel im Rolling Ball Test betrug 8 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Beispiel 20

Der erfindungsgemäße Polyurethan-Haftklebstoff setzt sich wie folgt zusammen:
NCO / OH - Verhältnis: 1,0
Verhältnis Anzahl Diol-OH / Anzahl Triol-OH: 2,33

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | | 14,9 | 69,35 mmol OH |
| | | 60,7 | 29,72 mmol OH |
| | Kristalex F85 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 11,0 | 99,07 mmol NCO |

Die Prüfmuster (50 g/m² Polyurethan-Haftklebstoff auf einer 26 µm dicken Polyesterfolie, siehe oben) erzielten eine Klebkraft auf Stahl von 4,5 N/cm. Im Schertest wurde bei 1 kg Scherbelastung eine Haltezeit von 10000 Minuten erreicht. Die Laufstrecke der Kugel im Rolling Ball Test betrug 28 mm. Der Haftklebstoff wurde visuell als glasklar transparent beurteilt. Nach einer Woche Bestrahlung mit der Sonnenlichtlampe traten keine Veränderungen auf, weder farblich noch in der Klebkraft. Mit dem Haftklebstoff ließen sich diverse Sorten Papier (normales Schreibpapier, Kopierpapier, Zeitungspapier, Zeitschriftenpapier) und Pappkarten sicher verkleben. Der Haftklebstoff ließ sich jeweils auch nach einem halben Jahr Verklebungszeit problemlos wieder von den genannten Substraten ablösen, ohne Rückstände oder fettig aussehende Flecken zu hinterlassen und ohne die Substrate zu schädigen. Dies war auch dann der Fall, wenn die Verklebungen auf Fensterscheiben vorgenommen wurden und der Haftklebstoff einer normalen Sonnenlichtbestrahlung ausgesetzt war. Der Haftklebstoff war weiterhin abwaschbar. Zur Prüfung wurde er mit feinkörnigem Sand und in einem zweiten Versuch mit feinkörnigem Talkum bestreut. Beide Stoffe ließen sich unter fließendem Wasser leicht wieder entfernen. Die Klebkraft lag anschließend wieder auf dem ursprünglichen Niveau. Die Mehrfachverwendbarkeit wurde geprüft, indem ein Prüfmuster 20 Mal hintereinander auf Schreibpapier geklebt und wieder abgelöst wurde. Die Klebkraft lag anschließend immer noch auf dem ursprünglichen Niveau.

### Vergleichsbeispiel 1

Der Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 7,5 | 34,94 mmol OH |
| | Voranol CP 6055 ® | 71,3 | 34,94 mmol OH |
| | Piccotac 1100 E | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 7,8 | 69,88 mmol NCO |

Die Prüfmuster (50 g/m² Haftklebstoff auf einer 26 µm dicken Polyesterfolie, siehe oben) erzielten eine Klebkraft auf Stahl von 0,3 N/cm. Im Schertest wurde bei 1 kg Scherbelastung eine Haltezeit von lediglich 120 Minuten erreicht. Der Haftklebstoff war nicht transparent.

### Vergleichsbeispiel 2

Der Haftklebstoff setzt sich wie folgt zusammen:
NCO / OH - Verhältnis: 1,0
Verhältnis Anzahl Diol-OH / Anzahl Triol-OH: 1,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 7,5 | 34,94 mmol OH |
| | Voranol CP 6055 ® | 71,3 | 34,94 mmol OH |
| | Regalite R 1100 | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 7,8 | 69,88 mmol NCO |

Die Prüfmuster (50 g/m² Haftklebstoff auf einer 26 µm dicken Polyesterfolie, siehe oben) erzielten eine Klebkraft auf Stahl von 0,1 N/cm. Im Schertest wurde bei 1 kg Scherbelastung eine Haltezeit von lediglich 28 Minuten erreicht. Der Haftklebstoff war nicht transparent.

### Vergleichsbeispiel 3

Der Haftklebstoff setzt sich wie folgt zusammen:
NCO / OH - Verhältnis: 1,0
Verhältnis Anzahl Diol-OH / Anzahl Triol-OH: 15,0

| | Rohstoff | Gewichtsanteil [Gew.-%] | Anzahl der OH-beziehungsweise NCO-Gruppen, bezogen auf den prozentualen Gewichtsanteil |
|---|---|---|---|
| A-Komponente | Voranol P 400 ® | 39,7 | 184,26 mmol OH |
| | Voranol CP 6055 ® | 25,1 | 12,28 mmol OH |
| | Kristalex F85 ® | 10,0 | |
| | Bismuttrisneodecanoat | 0,5 | |
| | Tinuvin 292 ® | 0,3 | |
| | Tinuvin 400 ® | 0,6 | |
| | Aerosil R202 ® | 2,0 | |
| B-Komponente | Vestanat IPDI ® | 21,8 | 196,55 mmol NCO |

Die Prüfmuster (50 g/m² Haftklebstoff auf einer 26 µm dicken Polyesterfolie, siehe oben) erzielten eine Klebkraft auf Stahl von 0,01 N/cm. Im Schertest wurde bei 1 kg Scherbelastung eine Haltezeit von größer < 1 Minute erreicht. Mit dem Haftklebstoff ließ sich kein Papier sicher verkleben.

## Patentansprüche

1. Haftklebstoff auf Basis einer Mischung aus einem chemisch vernetzten Polyurethan und mindestens einem Kohlenwasserstoffharz, wobei sich das chemisch vernetzte Polyurethan aus folgenden in Gegenwart des Kohlenwasserstoffharzes beziehungsweise der Kohlenwasserstoffharze katalytisch miteinander zur Reaktion gebrachten Ausgangsstoffen in den angegebenen Verhältnissen zusammensetzt:
a) mindestens einem aliphatischen oder alicyclischen Polyisocyanat, wobei deren Funktionalität jeweils kleiner oder gleich drei, bevorzugt zwei ist,
b) einer Kombination aus mindestens einem Polypropylenglykol-Diol und einem Polypropylenglykol-Triol, wobei das Verhältnis der Anzahl der Isocyanat-Gruppen zur Gesamtanzahl der Hydroxylgruppen zwischen 0,8 und 1,15, bevorzugt zwischen 0,95 und 1,05 liegt, wobei das Verhältnis der Anzahl der Hydroxylgruppen der Diol-Komponente zu der Anzahl der Hydroxylgruppen der Triol-Komponente zwischen 0,8 und 9,0, bevorzugt zwischen 1,0 und 4,0 liegt,
wobei die Diole und Triole alternativ jeweils wie folgt ausgewählt und kombiniert werden:
- Diole mit einem mittleren zahlengemittelten Molekulargewicht Mₙ von kleiner oder gleich 1000 werden mit Triolen kombiniert, deren mittleres zahlengemitteltes Molekulargewicht Mₙ größer oder gleich 1000, bevorzugt größer oder gleich 3000 ist,
- Diole mit einem mittleren zahlengemittelten Molekulargewicht von größer 1000 werden mit Triolen kombiniert, deren mittleres zahlengemitteltes Molekulargewicht kleiner 1000 ist,
**dadurch gekennzeichnet, dass**
mindestens ein Kohlenwasserstoffharz ein Monomerharz vom Typ Styrol / α-Methylstyrol mit einem mittleren zahlengemittelten Molekulargewicht Mₙ zwischen 200 und 6000, bevorzugt zwischen 500 und 2000 ist, wobei der Gewichtsanteil des Harzes in der Mischung größer 0 % ist und bis maximal einschließlich 55 % reicht.

2. Haftklebstoff nach Anspruch 1, **dadurch gekennzeichnet, dass** der Gewichtsanteil des Harzes in der Mischung größer 0 % ist und bis zu 30 % reicht.

3. Haftklebstoff nach Anspruch 1, **dadurch gekennzeichnet, dass**
der Gewichtsanteil des Harzes in der Mischung größer/gleich 30 % ist und bis maximal einschließlich 55 % reicht.

4. Haftklebstoff nach zumindest einem der Ansprüche 1 bis 3, **dadurch gekennzeichnet, dass**
der Katalysator für die Reaktion zum.Polyurethan eine Bismuth und Kohlenstoff enthaltende Verbindung, bevorzugt ein Bismutcarboxylat oder ein Bismutcarboxylat-Derivat ist oder enthält.

5. Haftklebstoff nach zumindest einem der vorherigen Ansprüche, **dadurch gekennzeichnet, dass**
das Diisocyanat ein aliphatisches oder alicyclisches Diisocyanat mit unsymmetrischer Molekülstruktur ist.

6. Haftklebstoff nach zumindest einem der vorherigen Ansprüche, **dadurch gekennzeichnet, dass**
das Diisocyanat Butan-1,4-diisocyanat, Tetramethoxybutan-1,4-diisocyanat, Hexan-1,6-diisocyanat, Ethylendiisocyanat, 2,2,4-Trimethylhexamethylendiisocyanat, Ethylethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl oder ein chloriertes, bromiertes, schwefel- oder phosphorhaltiges aliphatisches oder alicyclisches Diisocyanat sowie Derivate der aufgeführten Diisocyanate, insbesondere dimerisierte oder trimerisierte Typen, ist, besonders bevorzugt ein 1-Isocyanatomethyl-3-isocyanato-1,5,5-trimethylcyclohexan (Isophorondiisocyanat, abgekürzt IPDI).

7. Haftklebstoff nach zumindest einem der vorherigen Ansprüche, **dadurch gekennzeichnet, dass**
das gewichtsgemittelte Molekulargewicht M_{w} des oder der Monomerharze vom Typ Styrol / α-Methylstyrol zwischen 300 und 18000, bevorzugt zwischen 700 und 6000 liegt.

8. Haftklebstoff nach zumindest einem der vorherigen Ansprüche, **dadurch gekennzeichnet, dass**
Rezeptierungsbestandteile wie Katalysatoren, Alterungsschutzmittel (Antioxidantien), Lichtschutzmittel, UV-Absorber, rheologische Additive sowie sonstige Hilfs- und Zusatzstoffe zugemischt sind.

9. Verfahren zur Herstellung eines Haftklebstoffs nach zumindest einem der vorherigen Ansprüche, wobei
a) in einem Behälter A im Wesentlichen die vorgemischte Polypropylenglykol-Kombination (Polyol-Komponente) und in einem Behälter B im Wesentlichen die Isocyanat-Komponente vorgelegt werden, wobei das Kohlenwasserstoffharz beziehungsweise die Kohlenwasserstoffharze sowie gegebenenfalls die weiteren Rezeptierungsbestandteile diesen Komponenten bereits zuvor in einem üblichen Mischverfahren zugemischt wurden, wobei die Komponenten optional organische Lösemittel oder Wasser enthalten dürfen
b) die Polyol- und die Isocyanat-Komponente über Präzisionspumpen durch den Mischkopf oder das Mischrohr einer Mehrkomponenten-Misch- und Dosieranlage gefördert, dort homogen vermischt und somit zur Reaktion gebracht werden,
c) die somit gemischten, miteinander chemisch reagierenden Komponenten unmittelbar danach auf ein bahnförmiges Trägermaterial aufgebracht werden, das sich bevorzugt mit konstanter Geschwindigkeit bewegt,
d) das mit der reagierenden, harzhaltigen Polyurethanmasse beschichtete Trägermaterial durch einen Wärmekanal geführt wird, in dem die harzhaltige Polyurethanmasse zum Haftklebstoff aushärtet,
e) das beschichtete Trägermaterial abschließend in einer Wickelstation aufgewickelt wird.

10. Verfahren zur Herstellung eines Haftklebstoffs nach zumindest einem der vorherigen Ansprüche, **dadurch gekennzeichnet, dass**
die Herstellung ohne Lösemittel und/oder ohne Wasserzusatz erfolgt.

11. Verwendung eines Haftklebstoffs nach zumindest einem der vorherigen Ansprüche zur Herstellung von selbstklebenden Artikeln.

12. Verwendung einer Haftklebefolie nach zumindest einem der vorherigen Ansprüche zur Befestigung von Notizzetteln, Papierblättern, Kalenderblättern, Streifen, Karten oder Schachteln aus Pappe, Kartonmaterial oder Kunststoff.

## Claims

1. Pressure-sensitive adhesive based on a mixture of a chemically crosslinked polyurethane and at least one hydrocarbon resin, the chemically crosslinked polyurethane being composed of the following starting materials which in the stated proportions are reacted with one another catalytically in the presence of the hydrocarbon resin or hydrocarbon resins:
a) at least one aliphatic or alicyclic polyisocyanate whose functionality is in each case less than or equal to three, preferably two,
b) a combination of at least one polypropylene glycol diol and one polypropylene glycol triol, the ratio of the number of isocyanate groups to the total number of hydroxyl groups being between 0.8 and 1.15, preferably between 0.95 and 1.05, and the ratio of the number of hydroxyl groups in the diol component to the number of hydroxyl groups in the triol component being between 0.8 and 9.0, preferably between 1.0 and 4.0,
and the diols and triols alternatively being selected and combined in each case as follows:
- diols having a mean, number-averaged molecular weight Mₙ of less than or equal to 1000 are combined with triols whose mean, number-averaged molecular weight Mₙ is greater than or equal to 1000, preferably greater than or equal to 3000,
- diols having a mean, number-averaged molecular weight of greater than 1000 are combined with triols whose mean, number-averaged molecular weight is less than 1000,
**characterized in that** at least one hydrocarbon resin is a monomer resin of the styrene/α-methylstyrene type having a mean, number-averaged molecular weight Mₙ of between 200 and 6000, preferably between 500 and 2000, the weight fraction of the resin in the mixture being greater than 0% and ranging up to a maximum of 55% inclusive.

2. Pressure-sensitive adhesive according to Claim 1, **characterized in that** the weight fraction of the resin in the mixture is greater than 0% and ranges up to 30%.

3. Pressure-sensitive adhesive according to Claim 1, **characterized in that** the weight fraction of the resin in the mixture is greater than/equal to 30% and ranges up to a maximum of 55% inclusive.

4. Pressure-sensitive adhesive according to at least one of Claims 1 to 3, **characterized in that** the catalyst for the reaction to give polyurethane is or comprises a compound comprising bismuth and carbon, preferably a bismuth carboxylate or a bismuth carboxylate derivative.

5. Pressure-sensitive adhesive according to at least one of the preceding claims, **characterized in that** the diisocyanate is an aliphatic or alicyclic diisocyanate having an asymmetrical molecular structure.

6. Pressure-sensitive adhesive according to at least one of the preceding claims, **characterized in that** the diisocyanate is butane 1,4-diisocyanate, tetramethoxybutane 1,4-diisocyanate, hexane 1,6-diisocyanate, ethylene diisocyanate, 2,2,4-trimethylhexamethylene diisocyanate, ethylethylene diisocyanate, dicyclohexylmethane diisocyanate, 1,4-diisocyanatocyclohexane, 1,3-diisocyanatocyclohexane, 1,2-diisocyanatocyclohexane, 1,3-diisocyanatocyclopentane, 1,2-diisocyanatocyclopentane, 1,2-diisocyanatocyclobutane, 1-methyl-2,4-diisocyanatocyclohexane, 1,6-diisocyanato-2,2,4-trimethylhexane, 1,6-diisocyanato-2,4,4-trimethylhexane, 5-isocyanato-1-(2-isocyanatoeth-1-yl)-1,3,3-trimethylcyclohexane, 5-isocyanato-1-(3-isocyanatoprop-1-yl)-1,3,3-trimethylcyclohexane, 5-isocyanato-1-(4-isocyanatobut-1-yl)-1,3,3-trimethylcyclohexane, 1-isocyanato-2-(3-isocyanatoprop-1-yl)cyclohexane, 1-isocyanato-2-(2-isocyanatoeth-1-yl)cyclohexane, 2-heptyl-3,4-bis(9-isocyanatononyl)-1-pentylcyclohexane, norbonane diisocyanatomethyl or a chlorinated, brominated, sulfur-containing or phosphorus-containing aliphatic or alicyclic diisocyanate and also derivatives of the listed diisocyanates, more particularly dimerized or trimerized types, and more preferably is 1-isocyanatomethyl-3-isocyanato-1,5,5-trimethylcyclohexane (isophorone diisocyanate, IPDI for short).

7. Pressure-sensitive adhesive according to at least one of the preceding claims, **characterized in that** the weight-averaged molecular weight M_{w} of the monomer resin or resins of the styrene/α-methylstyrene type is between 300 and 18 000, preferably between 700 and 6000.

8. Pressure-sensitive adhesive according to at least one of the preceding claims, **characterized in that** formulating ingredients such as catalysts, aging inhibitors (antioxidants), light stabilizers, UV absorbers, rheological additives, and also other auxiliaries and additives, are admixed.

9. Process for preparing a pressure-sensitive adhesive according to at least one of the preceding claims, where
a) a vessel A is charged substantially with the premixed polypropylene glycol combination (polyol component) and a vessel B is charged substantially with the isocyanate component, the hydrocarbon resin or hydrocarbon resins and, where appropriate, the further formulating ingredients have been mixed into these components beforehand in a standard mixing procedure, and the components can optionally comprise organic solvents or water,
b) the polyol component and the isocyanate component are conveyed via precision pumps through the mixing head or mixing tube of a multi-component mixing and metering unit, where they are homogeneously mixed and consequently reacted,
c) the chemically inter-reactive components mixed in this way are applied immediately thereafter to a web-form backing material which is preferably moving at a constant speed,
d) the backing material coated with the reactive, resin-containing polyurethane composition is passed through a heating tunnel in which the resin-containing polyurethane composition cures to give the pressure-sensitive adhesive,
e) finally the coated backing material is wound up in a winding station.

10. Process for preparing a pressure-sensitive adhesive according to at least one of the preceding claims, **characterized in that** the preparation takes place without solvent and/or without addition of water.

11. Use of a pressure-sensitive adhesive according to at least one of the preceding claims for producing self-adhesive articles.

12. Use of a pressure-sensitive adhesive sheet according to at least one of the preceding claims for fixing notes, sheets of paper, calendar pages, strips, cards or boxes made of paperboard, cardboard material or plastic.

## Revendications

1. Autoadhésif à base d'un mélange d'un polyuréthane chimiquement réticulé et d'au moins une résine hydrocarbonée, le polyuréthane chimiquement réticulé étant composé des substances de départ suivantes, amenées à réagir catalytiquement les unes avec les autres en présence de la résine hydrocarbonée ou, selon le cas, des résines hydrocarbonées, dans les rapports indiquées :
a) au moins un polyisocyanate aliphatique ou alicyclique, leur fonctionnalité étant à chaque fois inférieure ou égale à trois, de préférence deux,
b) une combinaison d'au moins un polypropylèneglycoldiol et d'un polypropylèneglycol-triol, le rapport du nombre de groupes isocyanate au nombre total de groupes hydroxyle étant situé entre 0,8 et 1,15, de préférence entre 0,95 et 1,05, le rapport du nombre de groupes hydroxyle du composant diol au nombre de groupes hydroxyle du composant triol étant situé entre 0,8 et 9,0, de préférence entre 1,0 et 4,0,
les diols et les triols étant choisis et combinés alternativement à chaque fois comme suit :
- des diols présentant un poids moléculaire numérique moyen Mₙ inférieur ou égal à 1000 sont combinés avec des triols, dont le poids moléculaire numérique moyen Mₙ est supérieur ou égal à 1000, de préférence supérieur ou égal à 3000,
- des diols présentant un poids moléculaire numérique moyen supérieur à 1000 sont combinés avec des triols dont le poids moléculaire numérique moyen est inférieur à 1000,
**caractérisé en ce qu'**au moins une résine hydrocarbonée est une résine de monomères de type styrène/α-méthylstyrène présentant un poids moléculaire numérique moyen Mₙ entre 200 et 6000, de préférence entre 500 et 2000, la proportion pondérale de la résine dans le mélange étant supérieure à 0% et s'étendant au maximum jusqu'à 55% compris.

2. Autoadhésif selon la revendication 1, **caractérisé en ce que** la proportion pondérale de la résine dans le mélange est supérieure à 0% et s'étend jusqu'à 30%.

3. Autoadhésif selon la revendication 1, **caractérisé en ce que** la proportion pondérale de la résine dans le mélange est supérieure/égale à 30% et s'étend au maximum jusqu'à 55% compris.

4. Autoadhésif selon au moins l'une quelconque des revendications 1 à 3, **caractérisé en ce que** le catalyseur pour la réaction en polyuréthane est ou contient un composé contenant du bismuth et du carbone, de préférence un carboxylate de bismuth ou un dérivé de carboxylate de bismuth.

5. Autoadhésif selon au moins l'une quelconque des revendications précédentes, **caractérisé en ce que** le diisocyanate est un diisocyanate aliphatique ou alicyclique présentant une structure moléculaire asymétrique.

6. Autoadhésif selon au moins l'une quelconque des revendications précédentes, **caractérisé en ce que** le diisocyanate est le butane-1,4-diisocyanate, le tétraméthoxybutane-1,4-diisocyanate, l'hexane-1,6-diisocyanate, l'éthylènediisocyanate, le 2,2,4-triméthylhexaméthylènediisocyanate, l'éthyléthylènediisocyanate, le dicyclohexylméthanediisocyanate, le 1,4-diisocyanatocyclohexane, le 1,3-diisocyanatocyclohexane, le 1,2-diisocyanatocyclohexane, le 1,3-diisocyanatocyclopentane, le 1,2-diisocyanatocyclopentane, le 1,2-diisocyanatocyclobutane, le 1-méthyl-2,4-diisocyanatocyclohexane, le 1,6-diisocyanato-2,2,4-triméthylhexane, le 1,6-diisocyanato-2,4,4-triméthylhexane, le 5-isocyanato-1-(2-isocyanatoéth-1-yl)-1,3,3-triméthylcyclohexane, le 5-isocyanato-1-(3-isocyanatoprop-1-yl)-1,3,3-triméthylcyclohexane, le 5-isocyanato-1-(4-isocyanatobut-1-yl)-1,3,3-triméthylcyclohexane, le 1-isocyanato-2-(3-isocyanatoprop-1-yl)-cyclohexane, le 1-isocyanato-2-(2-isocyanatoéth-1-yl)-cyclohexane, le 2-heptyl-3,4-bis(9-isocyanatononyl)-1-pentylcyclohexane, le norbonanediisocyanatométhyle ou un diisocyanate aliphatique ou alicyclique chloré, bromé, soufré ou phosphoré ainsi que les dérivés des diisocyanates indiqués, en particulier des types dimérisés ou trimérisés, de manière particulièrement préférée un 1-isocyanatométhyl-3-isocyanato-1,5,5-triméthylcyclohexane (isophoronediisocyanate, en abrégé IPDI).

7. Autoadhésif selon au moins l'une quelconque des revendications précédentes, **caractérisé en ce que** le poids moléculaire pondéral moyen M_{w} de la ou des résines de monomères de type styrène/α-méthylstyrène se situe entre 300 et 18 000, de préférence entre 700 et 6000.

8. Autoadhésif selon au moins l'une quelconque des revendications précédentes, **caractérisé en ce que** des constituants de formulation, tels que des catalyseurs, des agents de protection contre le vieillissement (antioxydants), des agents de protection contre la lumière, des absorbants des UV, des additifs rhéologiques ainsi que d'autres adjuvants et additifs sont ajoutés en mélangeant.

9. Procédé pour la préparation d'un autoadhésif selon au moins l'une quelconque des revendications précédentes, où
a) on dispose au préalable dans un récipient A essentiellement la combinaison de polypropylèneglycol mélangée au préalable (composant polyol) et dans un récipient B essentiellement le composant isocyanate, la résine hydrocarbonée ou, selon le cas, les résines hydrocarbonées ainsi que le cas échéant les autres constituants de formulation ayant déjà été ajoutés en mélangeant au préalable à ces composants dans un procédé de mélange usuel, les composants pouvant éventuellement contenir des solvants organiques ou de l'eau
b) on transporte le composant polyol et le composant isocyanate via des pompes de précision au travers de la tête de mélange ou du tube de mélange d'une installation de mélange et de dosage de plusieurs composants, on les y mélange de manière homogène et on les y amène à réagir,
c) on applique les composants ainsi mélangés, réagissant chimiquement les uns avec les autres de manière directement consécutive sur un matériau support en forme de bande, qui se déplace de préférence à une vitesse constante,
d) on guide le matériau support revêtu par la masse de polyuréthane en réaction, contenant la résine, à travers un canal chauffant, dans lequel la masse de polyuréthane contenant la résine durcit en autoadhésif,
e) le matériau support revêtu est enfin enroulé dans un poste de bobinage.

10. Procédé pour la préparation d'un autoadhésif selon au moins l'une quelconque des revendications précédentes, **caractérisé en ce que** la préparation est réalisée sans solvant et/ou sans addition d'eau.

11. Utilisation d'un autoadhésif selon au moins l'une quelconque des revendications précédentes pour la fabrication d'objets autoadhésifs.

12. Utilisation d'une feuille autoadhésive selon au moins l'une quelconque des revendications précédentes pour la fixation de feuilles de bloc-notes, de feuilles de papier, de feuilles de calendrier, de bandes, de cartes ou de sachets en papier, en carton ou en matériau synthétique.
